# EUROPÄISCHE PATENTANMELDUNG

(11) **EP 3 421 574 A1**
(43) Veröffentlichungstag der Anmeldung: **02.01.2019**
(21) Anmeldenummer: 17178519.9
(22) Anmeldetag: 28.06.2017
(51) Int. Cl.: C10G 35/24

(54) **BETRIEB VON ANLAGEN FÜR DAS KATALYTISCHE REFORMING**

(71) Anmelder: SWISS RR Engineering Group AG, 6370 Stans (CH)
(72) Erfinder: STASENKA, Dzmitry, 246029 Gomel (BY); RUBEL, Torsten, 19063 Schwerin (DE)
(74) Vertreter: Frei Patent Attorneys

(57) **Zusammenfassung**

Es wird ein Verfahren zum Optimieren des Betriebs einer Anlage für das katalytische Reforming zur Verfügung gestellt. Die Anlage weist eine Mehrzahl von einen Katalysator enthaltenden Reaktoren auf, die nacheinander vom Arbeitsgas durchströmt werden, wobei sich die Zusammensetzung des Arbeitsgases in den Reaktoren ändert und wobei ausgangsseitig des letzten Reaktors ein Produkt resultiert. Gemäss dem Verfahren werden zunächst spezifische konstante Eigenschaften sowie während des Betriebs vorhandenen Anfangs-Betriebsparameter der Anlage erfasst. Dann findet eine rechnerische Simulation chemischer Vorgänge in den Reaktoren statt, wobei nebst den konstanten Eigenschaften und den erfassten Anfangs-Betriebsparametern auch Resultate einer Messung der chemischen Zusammensetzung des ausgangsseitig des letzten Reaktors resultierenden Produktes eingeht. Anschliessend wird eine rechnerische Simulation der chemischen Vorgänge in den Reaktoren mit verschiedenen, variierten Betriebsparametern vorgenommen, wobei als variierte Betriebsparameter nebst einer Durchflussmenge von molekularem Wasserstoff auch verschiedene Temperaturen des Arbeitsgases am Eingang jedes Reaktors individuell eingestellt werden. Aus der errechneten chemischen Zusammensetzung des Produkts wird ein Satz von optimierten Betriebsparametern ermittelt.

## Beschreibung

Die Erfindung betrifft das Gebiet der Erdölverarbeitung. Im Speziellen betrifft sie die einen Teilbereich der Raffination von Erdöl, nämlich das katalytische Reforming zwecks Steigerung der Oktanzahl und der Gewinnung von molekularem Wasserstoff und kurzkettigen Kohlenwasserstoffen (im Allgemeinen als "LPG" d.h. als Flüssiggas bezeichnet) aus dem durch Rohöl-Destillation gewonnenen Rohbenzin sowie je nach Bedarf auch zur Erhöhung des Anteils von Aromaten.

Für das katalytische Reforming kennt man insbesondere die traditionellen Festbettreaktoren sowie die etwas aufwändigeren regenerativen sogenannten CCR-Reaktoren. Im Allgemeinen weisen Reaktoren beider Art ein rotationszylindrisches Volumen auf, in welchem der Katalysator - mit sandartiger Konsistenz - zwischen einer äusseren gasdurchlässigen Wand und einer inneren gasdurchlässigen Wand angeordnet ist und, im Allgemeinen von aussen nach innen, durch ein Gasgemisch mit dem verdampften, zu reformierenden Rohbenzin (Naphtha) sowie einem molekularen Wasserstoff enthaltenden Kreislaufgas durchströmt wird. Dieses Gasgemisch ändert seine Zusammensetzung durch den Prozess. Nachfolgend wird dieses den Reaktor bzw. die Reaktoren durchströmende Gasgemisch Arbeitsgas genannt.

Im Allgemeinen wird das Arbeitsgas nacheinander mehrere Reaktorstufen durchströmen, bevor es als Reforming-Produkt in einem Nachbearbeitungsschritt aufgetrennt wird und die nach der Auftrennung resultierenden Produkte (Wasserstoff-Gasgemisch, aus welchem das Kreislaufgas abgezweigt wird; Reformat, LPG, Dampf, Abgas, etc.) gewonnen bzw. weiterverarbeitet werden können. In einer sogenannt semi-regenerativen Anlage werden die Reaktorstufen durch separate Festbettreaktoren gebildet, während in einer regenerativen (CCR-) Anlage die Reaktorstufen durch unter Umständen übereinander angeordnete und vom Katalysator durchströmte Teil-Reaktoren gebildet werden.

Die Performance der Reaktoren hängt von einer Reihe von Parametern ab, darunter dem von Kompressoren erzeugten Arbeitsdruck, der Arbeitstemperatur (Im Allgemeinen plusminus 500°C), der Zusammensetzung und dem Zustand des Katalysators, und der Zusammensetzung des Arbeitsgases.

Es ist bekannt, in Anlagen für das katalytische Reforming eine Regelungssoftware einzusetzen. Eine solche regelt über die für den Prozess benötigten Heizelemente sowie Pumpen der Anlage den Arbeitsdruck und die Arbeitstemperatur anhand von Resultaten einer Gaschromatographie des nach der letzten Reaktorstufe resultierenden Reforming-Produktes. Eine solche Regelungssoftware hat den Vorteil, dass eine rasche Reaktion auf veränderte Bedingungen in der Anlage möglich wäre (was aber in der Praxis mindestens nach einem Anlaufvorgang oft nicht so relevant ist). Allerdings ist eine solche Regelungssoftware nur beschränkt für die Optimierung des Prozesses geeignet, nicht zuletzt weil das Erfordernis an Reaktionen in Echtzeit nur das Erfassen und Verarbeiten sehr grober Daten ermöglicht.

Ebenfalls bekannt sind kinetische Reaktormodelle, welche auf generische Art, d.h. anhand von generischen Informationen über die verwendeten Bauteile unter Zuhilfenahme von statistischen Werten die sehr grobe Modellierung von Anlagen ermöglichen.

Aufgrund der sehr grossen Durchsätze und des sehr grossen Betriebsaufwandes von Refining-Anlagen lohnen auch Optimierungsgewinne von wenigen Prozenten oder sogar im Promillebereich einen durchaus beträchtlichen Aufwand. Es wäre daher wünschenswert, über Ansätze zu verfügen, wie die Effizienz von bestehenden oder neu geplanten Anlagen für das katalytische Reforming weiter verbessert werden kann. Eine solche Effizienzverbesserung ist daher die Aufgabe der vorliegenden Erfindung.

Die vorliegende Erfindung beruht unter anderem auf der Erkenntnis, dass eine rechnerische Bestimmung von Betriebsparametern für einen Betrieb in einem Gleichgewichtszustand (mit konstanten Betriebsparametern) einer Anlage für das katalytische Reforming von Vorteil ist, insbesondere wenn als solche letztlich einstellbare Betriebsparameter unter anderem die Temperaturen des Arbeitsgases am Eingang jedes Reaktors individuell eingestellt werden können.

Demgemäss wird ein Verfahren zum Betreiben einer Anlage für das katalytische Reforming zur Verfügung gestellt, welche Anlage eine Mehrzahl einen Katalysator enthaltenden Reaktoren aufweist, die von nacheinander von einem Kohlenwasserstoffe und molekularen Wasserstoff enthaltenden Arbeitsgas durchströmt werden, wobei sich die Zusammensetzung des Arbeitsgases in den Reaktoren ändert, und wobei ausgangsseitig des letzten der Reaktoren ein Produkt resultiert.

Gemäss dem Verfahren werden in einem ersten Schritt spezifische konstante, feststehende Eigenschaften und Betriebsparameter der bereits in Betrieb gesetzten Anlage erfasst, und eine chemische Zusammensetzung des Produktes oder einer Teilmenge des Produktes (bspw. ohne den molekularen Wasserstoff) wird durch eine Messung bestimmt.

In einem zweiten Schritt (erste Simulations-Phase) wird eine Simulation der chemischen Vorgänge in den Reaktoren vorgenommen, wobei unterschiedliche Verhältnisse in den verschiedenen Reaktoren berücksichtigt werden, und wobei nebst den geometrischen Eigenschaften und den Betriebsparametern auch die gemessene chemische Zusammensetzung in die Simulation eingeht.

In einem dritten Schritt (zweite Simulations-Phase) wird ohne die Notwendigkeit weiterer Messungen eine Simulation der chemischen Vorgänge mit variierten Betriebsparametern vorgenommen. Die Erfindung gemäss gemäss einem Aspekt zeichnet sich dadurch aus, dass dabei nebst der Durchflussmenge von Kreislaufgas (bzw. von molekularem Wasserstoff als Bestandteil des Kreislaufgases) auch die Temperaturen des Arbeitsgases am Eingang jedes Reaktors individuell als Betriebsparameter und Stellgrössen eingestellt werden.

Die Simulation gemäss dem dritten Schritt wird für die Optimierung der Betriebsparameter verwendet, indem durch Variation der Betriebsparameter ein im Hinblick auf eine vorgegebene Zielsetzung optimiertes Set an Betriebsparametern (inklusive die individuelle Arbeitsgas-Temperaturen am Eingang jedes Reaktors) ermittelt wird. In einem vierten Schritt wird der Reaktor so eingestellt, dass er mit den optimierten Betriebsparametern gefahren wird, namentlich unter anderem mit gezielt unterschiedlichen Arbeitsgastemperaturen am Eingang jedes Reaktors.

Die konstanten Eigenschaften der Anlage beinhalten die Anlagegeometrie, die Zusammensetzung des Katalysators, weitere Eigenschaften der physischen Anlage-Komponenten (bspw. die Art der Anlage (Festbettreaktoren vs. CCR-Anlage; Vorhandensein von einem oder mehr als einem Kompressor, Durchströmrichtung durch die Reaktoren, etc.). Die konstanten Eigenschaften sind also ganz konkrete Eigenschaften der vorliegenden, zu simulierenden Anlage, die anhand von Messungen oder anhand von vorliegenden anlagespezifischen Spezifikationen (bspw. Plänen, Katalysatorspezifikation, etc.) bestimmt werden und nicht wie im Stand der Technik bloss generische Werte die bspw. für jede Komponente der gattungsgemässen Art gelten.

Betriebsparameter sind vom Betreiber der Anlage mindestens teilweise einstellbare Grössen wie Druck, Temperaturen, Materialfluss durch die Reaktoren, Durchflussmenge von Kreislaufgas (konkret: Durchflussmenge von molekularem Wasserstoff; nebst diesem kann das Kreislaufgas weitere Bestandteile aufweisen, bspw. Stickstoff, Edelgase, etc.)

Ein Optimierungsverfahren für eine Anlage der genannten Art weist demnach die folgenden Verfahrensschritte auf:
- Erfassen von spezifischen konstanten Eigenschaften und Betriebsparametern der Anlage,
- Simulation der chemischen Vorgänge in den Reaktoren in einer ersten Phase, wobei unterschiedliche Verhältnisse in den verschiedenen Reaktoren berücksichtigt werden, und wobei nebst den konstanten Eigenschaften und den vorgegebenen Betriebsparametern (bspw. Druck, Temperatur, Materialfluss durch die Reaktoren) auch eine gemessene chemische Zusammensetzung des ausgangsseitig des letzten Reaktors resultierenden Produktes oder einer Teilmenge des Produktes in die Simulation eingeht,
- In einer zweiten Phase, Simulation der chemischen Vorgänge in den Reaktoren mit variierten Betriebsparametern, wobei nebst der Durchflussmenge von Kreislaufgas (bzw. von molekularem Wasserstoff als Bestandteil des Kreislaufgases) auch die Temperaturen des Arbeitsgases am Eingang jedes Reaktors individuell als Betriebsparameter eingestellt werden, und wobei als Resultat der Simulation eine chemische Zusammensetzung des Produkts errechnet wird.

Aus dem Resultaten der zweiten Phase wird ein Satz von optimierten Betriebsparametern ermittelt, insbesondere indem manuell oder automatisiert anhand vorgegebener Kriterien die errechneten chemischen Zusammensetzungen im Hinblick auf eine konkrete Zielsetzung verglichen werden und diejenigen Betriebsparameter ausgewählt werden, welche im Hinblick auf die Zielsetzung die besten Resultate bringen.

Die erfindungsgemässe Verwendung der Reaktor-Eingangstemperaturen als Stellgrössen unabhängig voneinander erweist sich als besonders vorteilhaft für die Optimierung. Sie ermöglicht einen konkret auf die Reaktionskinetik im jeweiligen Reaktor angepassten Betrieb, unter Berücksichtigung der Tatsache, dass sich die Zusammensetzung des Arbeitsgases von Reaktor zu Reaktor unterscheidet.

Ein weiterer Betriebsparameter ist der Druck. In Ausführungsformen, sofern die Anlage entsprechend ausgerüstet ist (bspw. indem pro Reaktor ein Kompressor zur Verfügung steht), wird auch der Druck individuell, pro Reaktor verschieden, als Betriebsparameter eingestellt. Diese Möglichkeit ergibt sich insbesondere bei Festbettreaktoren aber auch bei CCR-Anlagen mit Seite-an-Seite-Anordnung der Reaktoren.

Das Verfahren wird insbesondere offline ausgeführt, d.h. die erwähnten Daten (konstante Eigenschaften, Betriebsparameter, Messresultate) werden einmal erhoben, woraufhin die weiteren Schritte durchgeführt werden, ohne dass für die weiteren Schritte ein Feedback von der Anlage erforderlich ist. Obwohl online-Regelungen den Eindruck erwecken, rascher auf Veränderungen reagieren zu können und die diesbezüglichen Möglichkeiten aufgrund der zur Verfügung stehenden Rechnerleistungen gross sind, stellt sich eine offline-Lösung im vorliegenden Kontext als vorteilhaft heraus.

Zum einen können nämlich aufgrund dieses Vorgehens hochaufgelöste gaschromatographische Analysen verwendet werden, ohne dass aufgrund von erforderlichen Geschwindigkeiten eine Vorgruppierung in grob gefasste Stoffgruppen erforderlich sein muss. In Regelungssystemen nach dem Stand der Technik müssen die Ergebnisse der Gaschromatographie im Allgemeinen innerhalb von ca. 5 Minuten zur Verfügung stehen, weshalb nur eine Berücksichtigung von sehr breit gefassten Stoffgruppen, beispielsweise von einer bloss einstelligen Anzahl von Stoffgruppen möglich ist. Es hat sich aber gezeigt, dass eine Berücksichtigung einer grösseren Anzahl von im Arbeitsgas vorhandenen Stoffgruppen - bspw. ohne Vorgruppierung, d.h. unter Berücksichtigung der vollen Messgenauigkeit des Gaschromatographen und/oder in substantieller Anzahl von insbesondere mindestens 30 Stoffen und Stoffgruppen - eine Verbesserung nicht nur der Genauigkeit bei der Beschreibung der ablaufenden Prozesse mit sich bringt, sondern auch eine Optimierung mit einer effektiven, messbare Verbesserung der Effizienz der ganzen Anlage ermöglicht.

Das schliesst nicht aus, dass die gemessenen und eingespeisten Stoffe/Stoffgruppen durch das Modell in für die Simulation sinnvolle Untergruppen zusammengefasst werden können.

Zum anderen zeigt es sich, wohl nicht zuletzt aufgrund der Grösse von üblichen Anlagen und der entsprechenden Trägheit, dass eine Offline-Lösung besser geeignet ist, einen optimalen Gleichgewichtszustand zu ermitteln als eine Regelung mit Feedback.

In Ausführungsformen werden also die vorgenannten Schritte offline, ohne während der Simulationsschritte vorgenommenen und in die Rechnung erneut eingehende Messschritte vorgenommen. Ergänzend oder alternativ werden wie erwähnt die Resultate einer gaschromatographischen Analyse ohne Vorgruppierung berücksichtigt. Im Unterschied vom Stand der Technik werden also nicht direkt die Gaschromatographiedaten als Feedbacksignal zur Steuerung des Prozesses verwendet (es ist natürlich nicht ausgeschlossen, dass das zusätzlich zum erfindungsgemässen Vorgehen geschieht), sondern indirekt, über den beschriebenen Prozess, bei dem in die Optimierung (zweite Phase) die gemessenen Daten nicht mehr direkt eingehen. Dieser weniger direkt scheinende Vorgang hat sich als vorteilhaft erwiesen. Dies weil eine genauere Berücksichtigung auch der Reaktionskinetik möglich ist und insgesamt eine genauere belastbarere Simulation des Gleichgewichtszustands resultiert. Die anpassbaren Betriebsparameter können beinhalten:
- Die Temperatur des Arbeitsgases am Eingang jedes Reaktors (individuell anwählbar, beispielsweise von Reaktor zu Reaktor leicht ansteigend);
- Den Druck; gegebenenfalls unterschiedlich von Reaktor zu Reaktor, falls die Anlage das erlaubt
- Die Feed-Rate (d.h. Rohbenzin-Menge pro Zeiteinheit)
- Die H₂-Gas-Menge pro Zeiteinheit.

Die eigentlichen Simulationsschritte zeichnen sich insbesondere dadurch aus, dass die Reaktionskinetik mit realen, von der Anlage gewonnenen Daten und unter Berücksichtigung der Eigenschaften des Katalysators berücksichtigt wird, wobei auch die Verweildauer der Gasmoleküle an der Katalysatoroberfläche eingehen kann. Sie unterscheiden sich daher von aus dem Stand der Technik bekannten statistischen Verfahren, in welchen aufgrund von Erfahrungswerten und Daten verschiedener typenähnlicher Anlagen versucht wird, die Betriebsparameter für eine vorliegende Anlage abzuschätzen.

Die chemischen Vorgänge in einem Reaktor für das katalytische Reforming sind an sich bekannt, verstanden und als solche nicht Teil der vorliegenden Erfindung, ebenso die massgebenden Formeln für die entsprechende Kinetik. Sie seien daher an dieser Stelle nicht noch einmal wiedergegeben, stattdessen wird beispielsweise auf das Lexikon der Chemie, Stichwort "Reformieren" (1998 Spektrum Akademischer Verlag, Heidelberg, derzeit im Internet abrufbar unter http://www.spektrum.de/lexikon/chemie/reformieren/7875) oder ganz generell die Fachliteratur verwiesen.

In Ausführungsformen wird für die Simulation - in der ersten und in der zweiten Phase - das Volumen des jeweiligen Reaktors in eine Mehrzahl von koaxialen Hohlzylindervolumina unterteilt. Damit wird der insgesamt im Allgemeinen mindestens bereichsweise rotationszylindrischen Geometrie der Reaktoren sowie den Strömungsverhältnissen Rechnung getragen - die Strömung des Arbeitsgases im Reaktor ist jeweils von aussen nach innen durch den Katalysator oder eventuell umgekehrt von innen nach aussen.

Für die Simulation werden die Konzentrationen von Gasmengen von Stoffen und/oder Stoffgruppen im Arbeitsgas als pro Hohlzylindervolumen konstant aber potentiell von Holzylindervolumen zu Holzylindervolumen verschieden angenommen. In jedem Hohlzylindervolumen kann es auch eine potentiell andere Temperatur geben als in den benachbarten Hohlzylindervolumina. Die chemischen Reaktionen werden auf insbesondere bspw. mindestens 30 Stoffgruppen angewandt, in welche die vorhandenen (und gemessenen) Substanzen zusammengefasst werden.

In der ersten Simulations-Phase werden insbesondere Modellparameter angepasst, wobei sowohl die konstanten Eigenschaften der Reaktoren als auch die Betriebsparameter, bei welchen die Messung gemacht wurde, als Konstanten eingehen. Modellparameter können rein phänomenologisch sein (bspw. Koeffizienten, ohne spezielle physikalische Eigenschaften, in Gleichungen oder Formeln), oder sie können eine physikalische Bedeutung haben (bspw. den Durchflusswiderstand etc. charakterisieren). In Ausführungsformen sind sowohl rein phänomenologische als auch physikalische Parameter vorhanden. Zum Zweck der Anpassung der Modellparameter wird beispielsweise ausgehend von einem auf Erfahrungswerten mit anderen Anlagen basierendem Set von Modellparameter-Startwerten eine Simulation der chemischen Reaktionen durchgeführt und dann das gemäss der Reaktion resultierende Produkt mit dem effektiv durch die Messung charakterisierten Produkt verglichen. Dann werden ausgehend von den Startwerte die Modellparameter systematisch variiert um das errechnete Resultat möglichst mit den Messwerten in Übereinstimmung zu bringen. Sobald - in einem Abbruchkriterium quantitativ definiert - die Eigenschaften des Produkts gemäss Simulation genügend nahe bei den gemessenen Eigenschaften sind, wird die erste Phase beendet, und die Modellparameter, mit denen diese Übereinstimmung erreicht wurde - werden abgespeichert. Sie dienen als Konstanten in der zweiten Phase des Simulationsverfahrens, in welchem die Betriebsparameter variiert werden.

Es lässt sich ohne Weiteres ein Mass dafür finden, wie nah die effektiven und die errechneten Eigenschaften des Produkts einander sind. Mathematisch lassen sich bspw. die Konzentrationen der Stoffgruppen als Vektor eines mehrdimensionalen Vektorraums darstellen, und in diesem Vektorraum kann eine Metrik definiert werden, beispielsweise eine euklidische Metrik, bei Bedarf mit spezieller Gewichtung der Komponenten, wobei für die Produkteigenschaften wichtigere oder auch nur in kleinen Konzentrationen vorkommende Komponenten stärker gewichtet werden können als andere.

Nach Abschluss der ersten Phase kann beispielsweise ein Computerprogramm erzeugt werden, welches das für die erste Phase verwendete Simulationsprogramm im Kern beinhaltet, welches aber die Modellparameter als nicht veränderliche Konstanten beinhaltet, wobei die Betriebsparameter veränderbar sind. Ein solches Computerprogramm ist ein anlagespezifisches Programm welches entsprechend ein anlagespezifisch angepasstes physikalisch/chemisches Modell beinhaltet. Es kann - bspw. in kompilierter und/oder verschlüsselter Form - dem Betreiber der Anlage übergeben werden.

In der zweiten Phase werden dann Simulationen mit variierten Betriebsparametern aber konstanten Modellparametern vorgenommen, zwecks Prozessoptimierung. Dabei besteht sowohl die Möglichkeit einer automatischen Parametersuche - d.h. das Computerprogramm, welches die zweite Phase des Verfahrens ausführt, variiert durch einen entsprechenden Algorithmus gesteuert systematisch die Betriebsparameter - oder es kann auch eine manuelle Anpassung der Parameter durch den Benutzer erfolgen, wobei auch dann die eigentliche Simulation mit den vom Benutzer gewählten Betriebsparametern selbstverständlich mit technischen Hilfsmitteln, also durch einen Rechner erfolgt. Die Auswahl der optimierten Betriebsparameter, mit denen dann die Anlage effektiv betrieben wird, kann anhand vorgegebener Optimierungskriterien, bspw. Gewichtungen des Wertes von erreichten Optimierungen verschiedener Grössen (Oktanzahl, H₂-Ausbeute, Reformat-Ausbeute, LPG-Ausbeute, Erzeugung von Aromaten, Verminderung der Katalysatorverkokung, etc.) automatisiert oder ebenfalls manuell durch den Betreiber geschehen.

Die Rechenverfahren gemäss dem Ansatz der vorliegenden Erfindung sind notwendigerweise computergestützt durchzuführen und benötigen eine grosse Rechnerleistung. Da sie aber insbesondere offline durchführbar sind, gibt es nur sehr grosszügige Minimalanforderungen an die Rechnerleistung. Es kann ein generische modernes, leistungsfähiges Computersystem, insbesondere mit mehreren Prozessoren oder Prozessorkernen verwendet werden.

Die vorliegende Erfindung betrifft auch ein Computerprogramm zum Durchführen des hier beschriebenen Verfahrens.

Weiter betrifft sie auch ein anlagespezifisches Computerprogramm, welches die Resultate der ersten Phase als feste, nicht mehr anzupassende Parameter enthält und in welchem die Betriebsparameter automatisiert oder manuell einstellbar sind, um die zweite Phase der Simulation vorzunehmen. Insbesondere kann das anlagespezifische Computerprogramm die Parameter in verschlüsselter Form enthalten.

Sowohl das Computerprogramm zum Durchführen des ganzen Optimierungsverfahrens als auch das anlagespezifische Computerprogramm können nach jedem Aspekt und für jede Ausführungsform der hier beschriebenen Erfindung ausgerüstet sein, d.h. alle in diesem Text gemachten, sich auf das Verfahren beziehenden Ausführungen sind auch auf die Computerprogramme anwendbar.

Die Erfindung betrifft auch ein Betriebsverfahren für eine Anlage der vorstehend diskutierten Art für das katalytische Reforming, wobei verschiedene Temperaturen des Arbeitsgases am Eingang jedes Reaktors gezielt unterschiedlich eingestellt werden, und zwar insbesondere aufgrund des Resultats von Simulationen, insbesondere nach dem in diesem Text beschriebenen Optimierungsverfahren.

Nachfolgend werden einige Prinzipien und Ausführungsbeispiele der vorliegenden Erfindung anhand von Zeichnungen beschrieben. Es zeigen:
- Fig. 1: eine schematische Querschnittdarstellung durch einen Reaktor;
- Fig. 2: schematisch, ebenfalls in Querschnittdarstellung, die Unterteilung in koaxiale Hohlzylindervolumina;
- Fig. 3: ein vereinfachtes Schema einer Anlage mit Festbettreaktoren;
- Fig. 4: ein noch mehr vereinfachtes Schema einer CCR-Anlage;
- Fig. 5: ein vereinfachtes Ablaufschema der ersten Phase des Simulationsprozesses; und

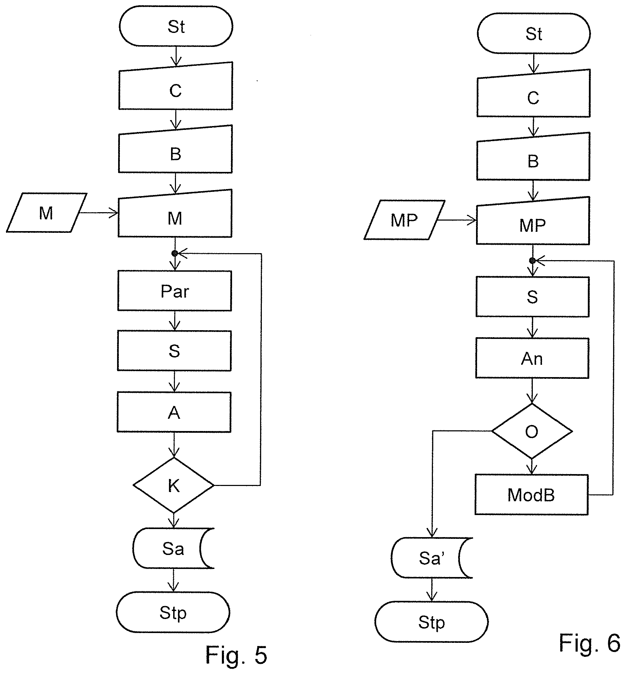

- Fig. 5: ein vereinfachtes Ablaufschema der zweiten Phase des Simulationsprozesses.

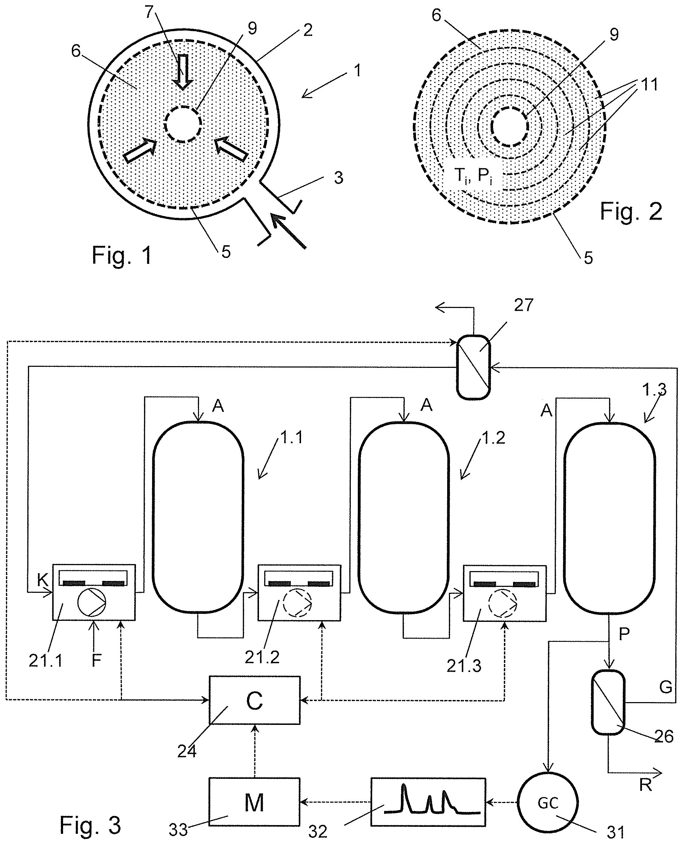

Figur 1 zeigt schematisch das Prinzip eines Reaktors 1. In einem äusseren Gefäss 2 mit einem Einlass 3 ist zwischen einer äusseren gasdurchlässigen Wand 5 und einer inneren gasdurchlässigen Wand 9 ein Volumen ausgebildet, welches mindestens teilweise mit einem Katalysator 6 gefüllt ist. Das Arbeitsgas strömt durch die äussere gasdurchlässige Wand 5 in dieses Volumen ein und durch die innere gasdurchlässige Wand 9 wieder aus diesem hinaus (die Strömungsrichtung wird durch die Blockpfeile 7 symbolisiert; ein Betrieb mit Strömung in die andere Richtung, von innen nach aussen, ist nicht ausgeschlossen). Auf dem Weg durch das Volumen werden im Arbeitsgas vorhandene Moleküle immer wieder auf der Oberfläche des Katalysators absorbiert und von dort wieder desorbiert. Die Verweildauer an der Katalysatoroberfläche hängt von der Temperatur ab, und die Adsorptionsrate sowie die Strömungspfade hängen von Temperatur und Druck ab; beides hat einen Einfluss auf die Reaktionskinetik. Ausserdem gehen auch die Eigenschaften - inklusive dem aktuellen Zustand; Grad der Verkokung etc. - des Katalysators in die Reaktionskinetik ein.

Gemäss der Erfindung wird nun wie erwähnt vorgeschlagen, anhand der an sich bekannten chemischen Reaktionen die Reaktionskinetik zu modellieren, insbesondere offline zu modellieren, und auf Basis des Modelles die beeinflussbaren Parameter "Betriebstemperatur pro Reaktor", "Druck, insbesondere pro Reaktor", "Fluss" und "Verhältnis Feed/Kreislaufgas" einzustellen.

Die chemischen Reaktionen während des katalytischen Reformings lassen sich in drei Hauptgruppen unterteilen:
a) Dehydration von Naphthenen in Aromate
b) Dehydration und Zyklisierung von Paraffinen in Naphthene
c) Hydrocracken von Napthenen in kurze Paraffine

Daraus ergibt sich ein lineares Gleichungssystem.

In an sich bekannter Art lässt sich auf Basis des Massenwirkungsgesetzes die Kinetik dieser Reaktionen modellieren, abhängig vom Druck und der herrschenden Temperatur sowie von der Aktivität des Katalysators. Dabei können die Temperatur, die Konzentrationen der einzelnen Reaktionspartner im Arbeitsgas und zu einem gewissen Grad auch der Druck von der Position innerhalb des Reaktors abhängen. Gemäss einem Aspekt der Erfindung wird vorgeschlagen, das zu berücksichtigen, indem das mit dem Katalysator 6 gefüllte Volumen im Modell in Ring-Teilvolumina unterteilt wird, was in Figur 2 schematisch dargestellt ist. Fig. 2 zeigt, wie Fig. 1 im Horizontalschnitt, schematisch die koaxialen Hohlzylindervolumina 11, die bspw. jeweils eine gleich grosse Dicke haben. Auch andere Aufteilungen der Hohlzylindervolumengrössen, bspw. indem die Volumeninhalte gleich gewählt sind, woraus sich verschiedene Dicken ergeben, sind nicht ausgeschlossen.

Die in die Modellierungen einfliessenden Parameter - bspw. Temperatur T und Konzentrationen Cₖ der verschiedenen Stoffe im Arbeitsgas - und allenfalls auch der Druck P können sich jeweils von Hohlzylindervolumen zu Hohlzylindervolumen (Index i) unterscheiden. Insbesondere kann bei der gezeigten Gasflussrichtung (Fig. 1) die Temperatur von aussen nach innen abnehmen, indem die im Reaktor ablaufenden Reaktionen unter dem Strich endotherm sind.

Figur 3 zeigt eine Anlage der semi-regenerativen Art (d.h. Regeneration des Katalysators in der Anlage ist möglich, aber nur unter Abschaltung des betreffenden Reaktors). Die Anlage weist drei nacheinander geschaltete Reaktoren 1, nämlich Festbett-Reaktoren 1.1, 1.2, 1.3 auf. Diesen vorgeschaltet ist jeweils eine Konditionierungseinrichtung (die physisch nicht als Einheit eingerichtet sein muss und bspw. mehrere voneinander separate Elemente aufweisen kann) 21.1, 21.2, 21.3. Eine solche weist jeweils einen geregelten Arbeitsgas-Erhitzer sowie eine Pumpvorrichtung (im Allgemeinen ein Kompressor; bei Bedarf kann auch eine Förderpumpe für noch flüssige Anteile vorhanden sein) auf. In Ausführungsformen der Anlage weist nicht jede Konditionierungseinrichtung einen Erhitzer auf, sondern bspw. nur eine davon. In Fig. 3 sind daher die Pumpsymbole der Konditionierungseinrichtungen 21.2, 21.3 für den zweiten und dritten Reaktor gestrichelt, d.h. als optional dargestellt.

Das Arbeitsgas A wird eingangsseitig aus einem - bereits durch Aufheizen in den gasförmigen Zustand gebrachten oder in der ersten Konditionierungseinrichtung 21.1 noch verdampften Feed F - sowie dem Kreislaufgas K gebildet. Es wird nacheinander durch die drei Reaktoren 1.1, 1.2, 1.3 geführt, wobei es seine Zusammensetzung ändert. Das nach dem letzten Reaktor 1.3 resultierende Reforming-Produkt P wird nach seiner Abkühlung (entsprechende Wärmetauscher und Kühler können gemäss dem Stand der Technik ausgebildet sein und sind in Fig. 3 nicht gezeichnet) einem Gasabscheider 26 zugeführt. Die nichtflüchtigen Komponenten R (Reformat) werden anschliessend weiteren Verarbeitungsschritten zugeführt, die dem Stand der Technik entsprechen können und hier nicht weiter ausgeführt werden. Die resultierenden flüchtigen Komponenten G, die reich an molekularem Wasserstoff sind, werden in einem Aufteiler 27 aufgeteilt, indem so viel Gas als das Kreislaufgas K wieder eingangsseitig mit dem Feed F gemischt wird, wie für die gewünschten Prozesse nötig. Der Rest des Gases G wird abgeführt und bedürfiaisgerecht verwertet.

Eine Steuereinrichtung 24 steuert die Konditionierungseinrichtungen 21,1, 21.2, 21.3 an, wobei in an sich bekannter Art jeweils ein Regelkreis vorhanden sein kann, indem die Konditionierungseinrichtungen über eine Temperatur- und/oder Druck- und/oder Durchflussmessung verfügen und die Steuereinrichtung eingerichtet ist, die entsprechenden Vorrichtungen der Konditionierungseinrichtung so einzustellen und bei Bedarf nachzujustieren, dass eine vorgegebene entsprechende Grösse (Temperatur/Druck/Durchfluss etc.) erreicht wird.

In ihrem Aufbau kann die Anlage als Ganze analog zu bereits bekannten gattungsgemässen Anlagen aufgebaut sein. Sie unterscheidet sich vom Stand der Technik aber insbesondere mindestens dadurch, wie die Steuereinrichtung 24 eingerichtet ist.

Ausgangsseitig des letzten Reaktors (unmittelbar an den letzten Reaktor anschliessend oder auch später, vor oder auch nach dem Gasabscheider 26) ist ein Gaschromatograph 31 vorhanden, dessen Output 32 in die Betriebsdaten einfliesst, welche in der nachstehend beschriebenen Art für die Steuerung der Anlage verwendet werden. Der gemäss dem hier beschriebenen Vorgehen nur indirekte Einfluss der Messdaten M auf die Steuereinrichtung 24 wird in Fig. 3 durch die Box 33 dargestellt.

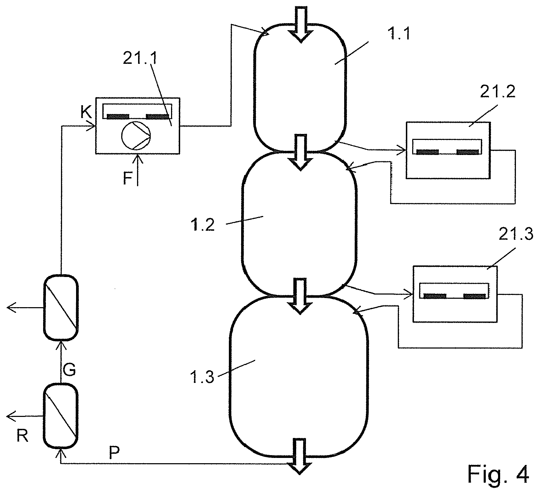

Figur 4 zeigt noch sehr schematisch (ohne Darstellung der Steuerungseinrichtung und des Gaschromatographen) eine Variante, in welcher die Anlage als regenerative Anlage ausgebildet ist und die Reaktoren 1.1, 1.2, 1.3 übereinander angeordnet sind, so dass der Katalysator wie durch die Blockpfeile sehr schematisch illustriert aufgrund der Schwerkraft während des Betriebs langsam durch die Reaktoren hindurch transportiert wird; nach Entnahme aus dem letzten Reaktor wird der Katalysator regeneriert; regeneriertes Katalysatormaterial wird während des Betriebs laufend dem ersten Reaktor 1.1 zugeführt.

Von der Anlage der in Figur 3 dargestellten Art unterscheidet sich eine solche Anlage insbesondere auch dadurch, dass aufgrund des Austauschs von Katalysatormaterial die Betriebsdrücke der Reaktoren nicht ganz unabhängig voneinander gesteuert werden können. Daher sind die zweite und dritte Konditionierungseinrichtung 21.2, 21.3 in Figur 4 ohne eigenständige Pumpmittel gezeichnet.

Die in Figuren 3 und 4 schematisch und vereinfacht dargestellten Anlagen sind bloss als Beispiele zu verstehen. Das erfindungsgemässe Vorgehen betrifft auch andere Anlagen, bspw. Anlagen mit mehr (oder eventuell weniger) als drei Reaktoren, regenerative Anlagen mit nebeneinander angeordneten Reaktoren (und einem dafür eingerichteten Transportsystem für den Katalysator), etc.

Figur 5 zeigt einen Ablauf der ersten Phase eines Prozessoptimierungsverfahrens. "St" bezeichnet den Anfang des Prozesses. In einem ersten Schritt C werden die konstanten realen Parameter der Anlage (Geometrie der Reaktoren, Füllmenge, etc.) eingelesen. Dann werden (Schritt B) die Betriebsparameter, wie sie in der Anlage vor der Prozessoptimierung verwendet werden, eingelesen; zu den Betriebsparametern gehören der Prozessdruck, die Prozesstemperatur, der Kreislaufgasfluss, etc.. Anschliessend werden die Messdaten M eingelesen, namentlich die vom Gaschromatographen erhaltenen Daten über die Zusammensetzung des Produktes P bzw. des Reformats R (siehe Fig. 3). Im Unterschied zu Steuerungssystemen gemäss dem Stand der Technik wird dabei das ganze Gaschromatogramm im Rahmen der Auflösungsgenauigkeit des Gaschromatographen berücksichtigt, d.h. es findet keine Vorgruppierung der Verbindungen dar, wie das gemäss dem Stand der Technik gemacht wird, um die nötige Analysegeschwindigkeit zur erhalten.

In einem nächsten Schritt Par werden Modellparameter gewählt (Schritt Par). Die initialen Modellparameter können bspw. immer gleich gewählt sein, oder sie können vom Operator oder einer Software anhand der Daten (Konstanten, Betriebsparameter, Messwerte) grob geschätzt werden. Daraufhin findet eine Simulation S mit den Modellparametern durchgeführt, und die Abweichung der vom Modell produzierten Werte von den Messwerten wird quantifiziert (Schritt A). Entspricht die Abweichung nicht einem Abbruchkriterium (d.h. ist die Abweichung grösser als ein vorgegebener Wert; Verzweigungsstelle K), werden die Modellparameter angepasst (zurück zu Schritt Par), und es findet eine erneute Simulation statt. Dies wird so lange durchgeführt, bis die Modellparameter eine ausreichend kleine Abweichung von den realen Daten produzieren. Sobald das Abbruchkriterium erfüllt ist (K) werden die aktuellen, erfolgreichen Modellparameter abgespeichert (Sa), und die erste Phase des Prozessoptimierungsverfahrens ist abgeschlossen (Stp).

Das Resultat der ersten Phase kann insbesondere in ein auf eine bestimmte Anlage zugeschnittenes Verfahren in Form einer Software umgesetzt werden, mit den abgespeicherten Modellparametern. In dieser Software können dann Betriebsparameter automatisiert oder manuell in Testreihen durch spezialisierte Anwender des erfindungsgemässen Ansatzes oder die Anlagenbetrieber angepasst werden.

Figur 6 zeigt die zweite Phase des Prozessoptimierungsverfahrens. Zunächst werden (Schritte C, B) erneut die Konstanten und die Betriebsparameter eingelesen, wobei diese auch von der ersten Phase des Prozessoptimierungsverfahrens übernommen werden können. Ebenfalls übernommen werden die in der ersten Phase des Prozessoptimierungsverfahrens ermittelten und abgespeicherten (Schritt Sa) Modellparameter MP. Dann erfolgt eine Simulation (Schritt S), und die Resultate werden analysiert (Schritt An) im Hinblick auf die vorzunehmende Optimierung. Sofern noch Optimierungspotential erkannt wird (Verzweigungsstelle O), findet eine Modifikation der Betriebsparameter statt (ModB), woraufhin erneut simuliert wird. Dieser Vorgang wird so lange durch systematische Variation der Betriebsparameter wiederholt, bis keine nennenswertes Optimierungspotential mehr existiert. Erst dann werden die als optimiert erkannten Betreibsparameter Abgespeichert (Sa') und ausgegeben, was die zweite Phase des Prozessoptimierungsverfahrens beendet.

Vorgaben für die Optimierung können sein:
- Erhöhung der Ausbeute von Reformat
- Erhöhung der Oktanzahl
- Erhöhung der Ausbeute von molekularem Wasserstoff
- Erhöhung der Ausbeute von LPG
- Erhöhung der Produktion von bestimmten Aromaten
- Erhöhung der Lebensdauer des Katalysators (weniger Verkokung)

Die Vorgaben betreffen jeweils den Vergleich mit dem Betrieb ohne die Prozessoptimierung. Diese Vorgaben sind teilweise im Widerstreit zueinander, und es kann von spezifischen Bedürfnissen abhängen, welche der Vorgaben vorrangig ist und bei welcher der Vorgaben allenfalls in Kauf genommen werden kann, dass sie kaum oder gar nicht umgesetzt wird. Es hat sich aber gezeigt, dass bis zu einem gewissen Grad aufgrund des Optimierungspotentials für viele Anlagen alle oder mindestens fast alle der Vorgaben umgesetzt werden können, und zwar mit Steigerungen im einstelligen Prozentzahlbereich bzw. - bei der Lebensdauer des Katalysators - höher.

Daraufhin wird in einem weiteren Schritt Prozessoptimierungsverfahrens die Anlage mit den angepassten Betriebsparametern betrieben. Zu diesem Zweck findet eine langsame, kontrollierte Anpassung statt. Das kann automatisiert oder vom Betriebspersonal durch Bedienung der Steuereinrichtung 24 manuell geschehen.

Es besteht im Prinzip die Option, nach dem letzten Schritt des Prozessoptimierungsverfahrens das Prozessoptimierungsverfahren noch einmal beginnend mit der ersten Phase durchzuführen, um die Modellparameter mit Messungen im optimierten Zustand noch einmal anzupassen (in der ersten Phase) und mit angepassten Modellparametern noch einmal zu eruieren, ob ein weiteres Optimierungspotential besteht. Das ist jedoch im Allgemeinen gar nicht nötig, da das Modell robust ist in Bezug auf Anpassung der Betriebsparameter.

## Patentansprüche

1. Verfahren zum Optimieren des Betriebs einer Anlage für das katalytische Reforming, welche Anlage eine Mehrzahl von einen Katalysator enthaltenden Reaktoren aufweist, die von nacheinander von einem Kohlenwasserstoffe und molekularen Wasserstoff enthaltenden Arbeitsgas durchströmt werden, wobei sich die Zusammensetzung des Arbeitsgases in den Reaktoren ändert und wobei ausgangsseitig eines letzten der Reaktoren ein Produkt resultiert, welches Verfahren folgende Schritte aufweist:
- Erfassen von spezifischen konstanten Eigenschaften und während des Betriebs vorhandenen Anfangs-Betriebsparametern der Anlage,
- Rechnerische Simulation chemischer Vorgänge in den Reaktoren in einer ersten Phase, wobei unterschiedliche Verhältnisse in den verschiedenen Reaktoren berücksichtigt werden, und wobei nebst den konstanten Eigenschaften und den erfassten Anfangs-Betriebsparametern auch Resultate einer Messung der chemischen Zusammensetzung des ausgangsseitig des letzten Reaktors resultierenden Produktes oder einer Teilmenge dieses Produktes in die Simulation eingeht,
- Rechnerische Simulationen der chemischen Vorgänge in den Reaktoren mit verschiedenen, variierten Betriebsparametern in einer zweiten, der ersten Phase nachfolgenden Phase, unter Berücksichtigung von Resultaten der ersten Phase, wobei als variierte Betriebsparameter nebst einer Durchflussmenge von molekularem Wasserstoff auch verschiedene Temperaturen des Arbeitsgases am Eingang jedes Reaktors individuell eingestellt werden, und wobei als Resultat der rechnerischen Simulation eine chemische Zusammensetzung des Produkts (die abhängig ist von den Betriebsparametern) errechnet wird,
- Bestimmen eines Satzes von optimierten Betriebsparametern aus Resultaten der zweiten Phase.

2. Verfahren nach Anspruch 1, wobei in der zweiten Phase auch ein Arbeitsdruck in einem Reaktor als Betriebsparameter variiert wird.

3. Verfahren nach Anspruch 2, wobei in der zweiten Phase als variierte Betriebsparameter auch verschiedene Drücke in jedem Reaktor individuell eingestellt werden.

4. Verfahren nach einem der vorangehenden Ansprüche, wobei die rechnerischen Simulationen in der ersten und in der zweiten Phase offline durchgeführt werden.

5. Verfahren nach einem der vorangehenden Ansprüche, wobei die Messung der chemischen Zusammensetzung eine gaschromatographische Analyse beinhaltet.

6. Verfahren nach Anspruch 5, wobei für die erste Phase die Resultate der gaschromatographischen Analyse ohne Vorgruppierung erfasst werden.

7. Verfahren nach einem der vorangehenden Ansprüche, wobei für die Simulation in der ersten Phase sowohl die konstanten Eigenschaften der Reaktoren als auch die Betriebsparameter konstant gehalten werden, abhängig von Modellparametern als Resultat eine errechnete chemische Zusammensetzung des Produkts ermittelt und mit den Resultaten der Messung verglichen wird, und dass die Simulation mit jeweils systematisch variierten Modellparametern so oft wiederholt wird, bis die Abweichung der errechneten chemischen Zusammensetzung des Produkts von den Resultaten der Messung einem Abbruchkriterium entspricht, woraufhin diejenigen Modellparameter, mit denen das Abbruchkriterium erreicht wurde, als in der zweiten Phase konstante Modellparameter abgespeichert werden.

8. Verfahren nach einem der vorangehenden Ansprüche, wobei nach Abschluss der ersten Phase ein Computerprogramm erzeugt wird, welches ein Simulationsprogramm für die Simulation in der zweiten Phase enthält sowie in der ersten Phase ermittelte Modellparameter als Konstanten aufweist.

9. Verfahren nach einem der vorangehenden Ansprüche, wobei in der zweiten Phase die Betriebsparameter systematisch variiert werden, um das Produkt nach vorgegebenen Optimierungskriterien zu optimieren.

10. Verfahren nach einem der vorangehenden Ansprüche, wobei sowohl für die erste Simulation als auch für die zweite Simulation Volumina der Reaktoren in koaxiale Hohlzylindervolumina unterteilt werden, und dass für die Simulation die Konzentrationen von Gasmengen von Stoffen und/oder Stoffgruppen im Arbeitsgas pro Hohlzylindervolumen als konstant aber potentiell von Holzylindervolumen zu Holzylindervolumen verschieden angenommen werden.

11. Verfahren zum Betreiben einer Anlage für das katalytische Reforming, welche Anlage eine Mehrzahl einen Katalysator enthaltenden Reaktoren aufweist, die von nacheinander von einem Kohlenwasserstoffe und molekularen Wasserstoff enthaltenden Arbeitsgas durchströmt werden, wobei sich die Zusammensetzung des Arbeitsgases in den Reaktoren ändert und wobei ausgangsseitig eines letzten der Reaktoren ein Produkt resultiert,
wobei die Anlage zunächst konstant mit Anfangs-Betriebsparametern betrieben wird, und anschliessend das Verfahren nach einem der vorangehenden Ansprüche durchgeführt wird,
und wobei anschliessend der Betrieb der Anlage durch Ersatz der Anfangs-Betriebsparameter durch die optimierten Betriebsparameter umgestellt wird.

12. Verfahren, insbesondere nach Anspruch 11, zum Betreiben einer Anlage für das katalytische Reforming, welche Anlage eine Mehrzahl einen Katalysator enthaltenden Reaktoren aufweist, die von nacheinander von einem Kohlenwasserstoffe und molekularen Wasserstoff enthaltenden Arbeitsgas durchströmt werden, wobei sich die Zusammensetzung des Arbeitsgases in den Reaktoren ändert und wobei ausgangsseitig eines letzten der Reaktoren ein Produkt resultiert, wobei verschiedene Temperaturen des Arbeitsgases am Eingang jedes Reaktors unterschiedlich eingestellt werden.

13. Computerprogramm, welches auf eine Datenverarbeitungseinrichtung oder ein System von Datenverarbeitungseinrichtungen ladbar ist und welches bei Ausführung die Datenverarbeitungseinrichtung bzw. das System von Datenverarbeitungseinrichtungen ein Verfahren nach einem der Ansprüche 1-10 ausführen lässt.

14. Datenträger, enthaltend ein Computerprogramm nach Anspruch 13.

15. Anlagespezifisches Computerprogramm zum Optimieren des Betriebs einer Anlage für das katalytische Reforming, welche Anlage eine Mehrzahl einen Katalysator enthaltenden Reaktoren aufweist, die von nacheinander von einem Kohlenwasserstoffe und molekularen Wasserstoff enthaltenden Arbeitsgas durchströmt werden, wobei sich die Zusammensetzung des Arbeitsgases in den Reaktoren ändert und wobei ausgangsseitig eines letzten der Reaktoren ein Produkt resultiert,
wobei das Computerprogramm auf eine Datenverarbeitungseinrichtung oder ein System von Datenverarbeitungseinrichtungen ladbar ist und eingerichtet ist eine rechnerische Simulationen der chemischen Vorgänge in den Reaktoren mit verschiedenen, variierten Betriebsparametern durchzufiuhren eine chemische Zusammensetzung des Produktes zu errechnen,
und wobei das Computerprogramm für die Anlage spezifisch ausgebildet ist, indem es Modellparameter enthält, die das Resultat einer rechnerischen Simulation chemischer Vorgänge in den Reaktoren sind, in welcher unterschiedliche Verhältnisse in den verschiedenen Reaktoren berücksichtigt sind, und in welche nebst konstanten Eigenschaften und erfassten Anfangs-Betriebsparametern auch Resultate einer Messung der chemischen Zusammensetzung des ausgangsseitig des letzten Reaktors resultierenden Produktes oder einer Teilmenge dieses Produktes in die Simulation eingegangen sind.

16. Datenträger, enthaltend ein Computerprogramm nach Anspruch 15.
